# FASCICULE DE BREVET EUROPEEN

(11) **EP 0 883 452 B1**
(45) Date de publication et mention de la délivrance du brevet: **10.11.1999**
(21) Numéro de dépôt: 97907135.4
(22) Date de dépôt: 27.02.1997
(51) Int. Cl.: B21D 5/06, B21D 11/02, B60P 1/28

(54) **PROCEDE DE FABRICATION D'UN CORPS DE BENNE A PROFIL CONCAVE**
HERSTELLUNGSVERFAHREN EINES KIPPKÜBELKÖRPERS MIT KONKAVEM PROFIL
METHOD FOR MAKING A SKIP BODY WITH A CONCAVE CROSS SECTION

(30) Priorité: 01.03.1996 FR 9602848
(43) Date de publication de la demande: 16.12.1998
(73) Titulaire: LOHR INDUSTRIE, 67980 Hangenbieten (FR)
(72) Inventeur: DECKERT, Serge, F-67450 Mundolsheim (FR); ANDRE, Jean-Luc, F-67210 Obernai (FR)
(74) Mandataire: Metz, Paul
(86) Numéro de dépôt international: FR9700345
(87) Numéro de publication internationale: WO9731728

(56) Documents cités:
- FR-A- 1 087 985
- FR-A- 1 308 612
- US-A- 3 575 031
- US-A- 5 482 356

## Description

L'invention se rapporte à un procédé de conformation d'un corps de benne selon un profil concave de courbure continue, sans pliage, à partir d'un grand format de tôle permettant la fabrication d'une seule pièce.

Les bennes à fond incurvé sont réalisées actuellement par pliage. La forme concave du profil de section transversale résulte d'une succession de plis longitudinaux procurant au profil de section un contour polygonal.

Cette succession de plis ne s'avère pas satisfaisante pour différentes raisons.

D'abord, un corps de benne adapté doit présenter une structure intérieure en contact avec la charge, la plus lisse possible et sans arête pour éviter la rétention de résidus préjudiciables au bon déchargement et à la bonne tenue du métal dans le temps, résidus dont la présence est peu souhaitable en raison de leur mélange possible avec la matière du chargement suivant.

De plus, certains métaux comme l'aluminium nécessitent une grande précaution de pliage.

Par ailleurs, d'autres métaux intéressants tels que l'acier à haute limite élastique dit HLE ou THLE ne peuvent garder une forme définitive sans pliage. L'emploi de ces métaux s'avère particulièrement pénalisant sur des formats de longueur importante difficiles à réaliser d'une seule pièce comme les corps de bennes. Ces métaux en grands formats s'avèrent encore plus contraignants à conformer voire impossibles autrement que par pliage sur des formes destinées à s'encastrer l'une dans l'autre comme les corps de benne avec leur berceau récepteur de forme complémentaire.

De plus, en raison de ces formes complémentaires il faut assurer une parfaite concentricité entre les pliages du corps de benne et ceux du berceau. Cette technique nécessite aussi pour sa mise en oeuvre des machines spécifiques très onéreuses.

On était donc condamné à utiliser de plus faibles dimensions ou de conserver la technique du pliage et ses nombreux inconvénients.

Or, les métaux mentionnés ci-dessus présentent suffisamment d'avantages pour les préférer aux métaux classiques.

En effet, l'aluminium par sa plus faible densité permet d'augmenter le poids de la charge utile transportée. Pour cette raison, beaucoup de transporteurs possèdent déjà des remorques, semi-remorques et bennes réalisées majoritairement en aluminium.

Ces bennes sont toutes de construction classique à section sensiblement rectangulaire nécessitant de multiples renforts de rigidification.

Pour d'autres raisons, l'acier à haute limite élastique fait partie des métaux préférés pour la constitution de corps de bennes.

Alors que l'aluminium présente de sérieux risques de fissuration au pliage, l'acier à haute limite élastique se prête très mal au pliage et présente même une résistance suffisamment forte pour rendre impossible son pliage avec les moyens habituels courants.

Cependant, l'acier à haute limite élastique connu sous le sigle HLE ou à très haute limite élastique THLE présente deux des principaux avantages recherchés pour la matière appelée à constituer un corps de benne :
. la bonne résistance mécanique aux chocs et au poinçonnement de cet acier, qualité particulièrement utile pour les bennes à enrochement, permet de limiter les risques lors de la chute de pratiquement tous les matériaux lourds et donc de présenter un comportement satisfaisant pour tous les cas d'exploitation,
. les qualités de cet acier s'expriment également en termes de résistance à l'abrasion.

Cette plus grande résistance offre la possibilité de gagner en poids tout en diminuant le prix de revient par l'utilisation de tôles plus minces.

Ces avantages entraînent en contrepartie des difficultés de fabrication.

L'acier élastique présente un effet ressort qui contrarie la prise d'une forme non naturelle définitive et précise et son maintien après cintrage.

Or, il s'agit précisément, dans le cadre d'un procédé de fabrication industrielle de corps de bennes, d'arriver à garantir l'obtention d'une forme constante de profil incurvé à courbure continue par exemple sensiblement semi-elliptique, avec une certaine précision et de façon reproductible.

La présente invention porte sur un procédé de conformation d'un corps de benne selon un profil concave de courbure continue, sans pliage, à partir d'un grand format de tôle caractérisé par les étapes suivantes :
. on prépare un grand format de tôle d'une seule pièce ou rendu d'une seule pièce ;
. on incurve par des moyens de maintien le format de tôle d'une seule pièce selon une forme de profil de section voisine de la forme définitive obtenue par anticipation des déformations ultérieures du corps de benne;
. on solidarise à l'une des extrémités du corps de benne une plaque d'obturation dont les contours présentent la forme exacte du profil concave à obtenir en appliquant, au fur et à mesure de la solidarisation, les bords de l'ouverture de cette extrémité de la tôle contre les chants de la plaque d'obturation ;
. on rigidifie l'autre extrémité de la tôle par un renfort selon le profil exact à obtenir ;
. on soulage la pression provoquée par les moyens de maintien et on libère le corps de benne qui s'établit selon le profil définitif;
. on rigidifie les bords longitudinaux avant ou après incurvation du format de tôle.

La présente invention permet de fabriquer un corps de benne à fond concave, de courbure continue, sans pliage, à partir d'un grand format de tôle dans tous les métaux adaptés à la construction de bennes mais surtout dans tous les métaux préférés à savoir l'aluminium et l'acier à haute limite élastique.

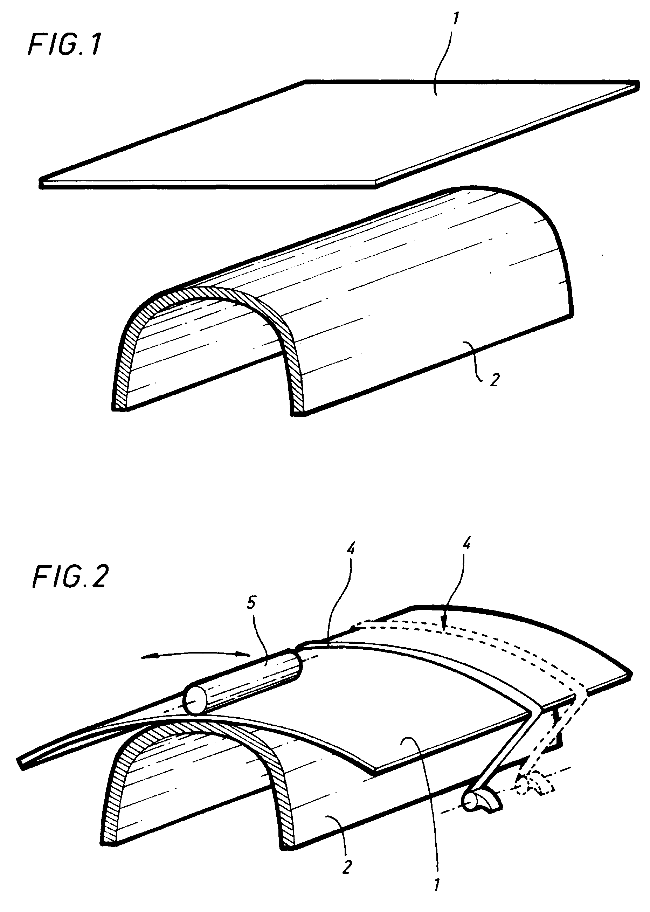

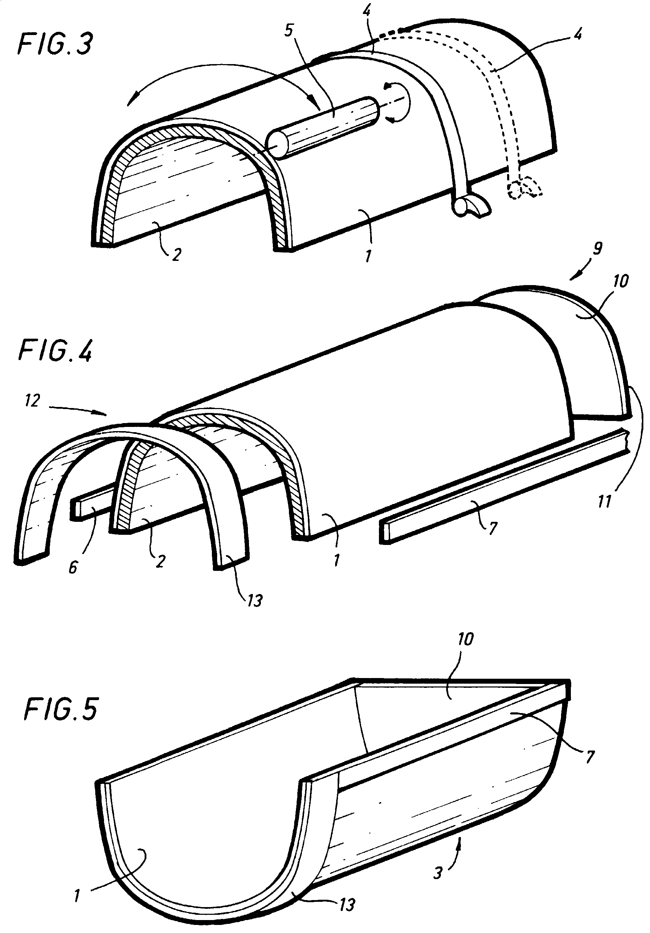

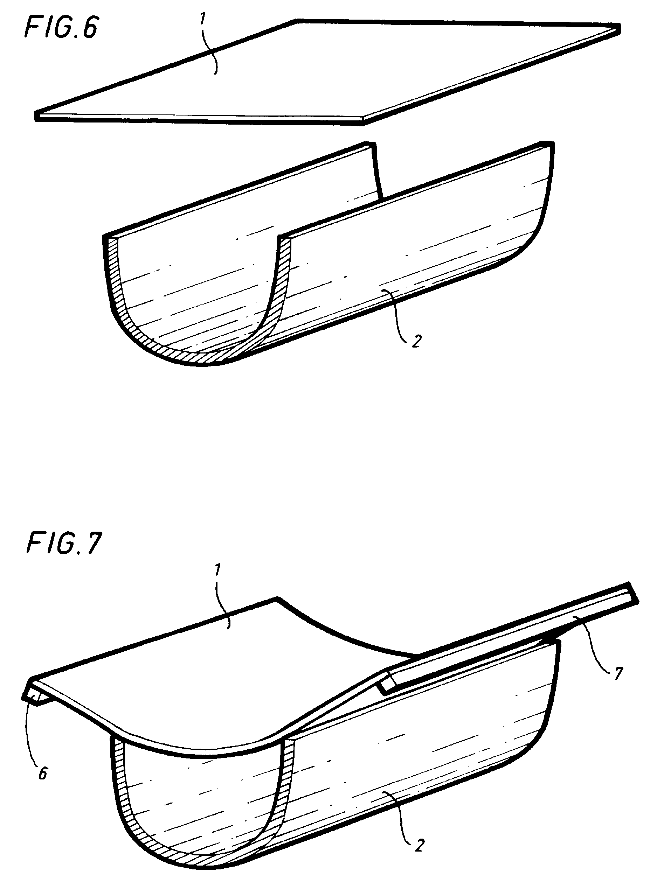

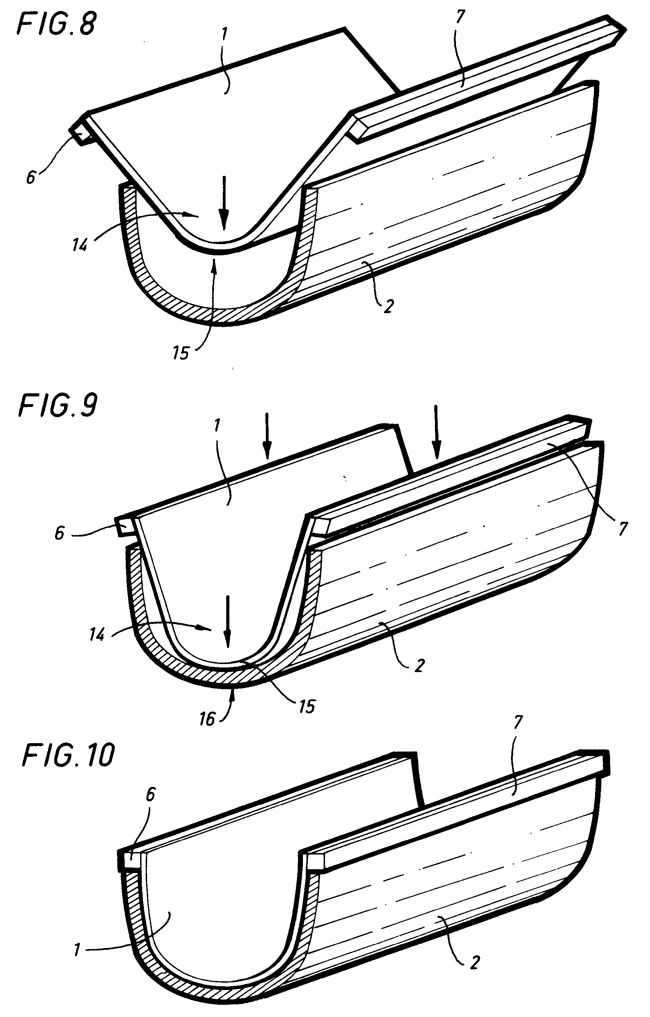

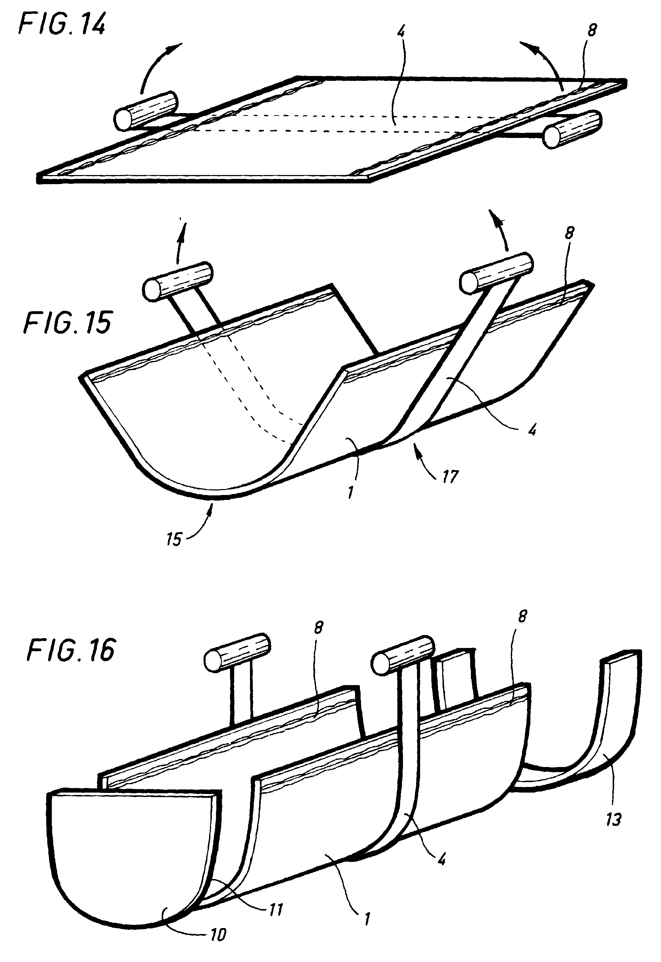

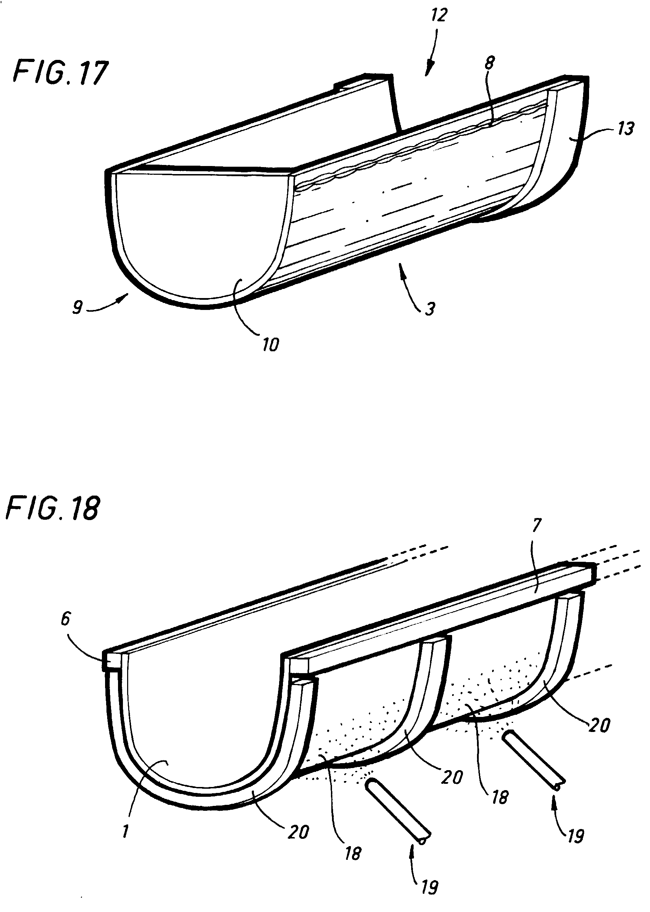

D'autres caractéristiques préférées et avantages de l'invention apparaîtront dans la description qui suit, donnée à titre d'exemple et accompagnée des dessins qui représentent :
. les figures 1 à 5 sont des schémas illustrant une première variante par application sur un conformateur convexe ;
. les figures 6 à 13 sont des schémas illustrant une deuxième variante utilisant un conformateur concave ;
. les figures 14 à 17 sont des schémas illustrant une troisième méthode dite par pincement ;
. la figure 18 montre un exemple de traitement mécanique.

L'invention peut être mise en oeuvre par trois méthodes d'incurvation de la tôle : une première méthode par application sur un conformateur, une deuxième méthode par introduction dans un conformateur et une troisième méthode par pincement.

### Méthode par application sur un conformateur :

Elle consiste à rapporter puis à appliquer toute la surface d'un grand format ou d'une feuille 1 de tôle ou une grande partie de celle-ci contre la surface latérale d'un conformateur ou d'une contre-forme 2 qui reproduit à quelques différences près la forme de profil incurvé d'un corps 3 de benne à obtenir (figures 1 à 5).

L'application s'effectuera sur cette contre-forme en utilisant tous les moyens de maintien ou d'application adaptés : sangles 4, galets ou rouleaux 5 mobiles de pression, vérins, chaînes...

Des bordures ou profils de rives 6 ou 7 pourront être réalisés avant ou après le passage sur le conformateur 2.

S'ils sont réalisés avant, ils peuvent servir de prise aux moyens de maintien.

La rigidification longitudinale des bords de rives peut également résulter de la pratique de nervure(s), plis ou autres déformations 8 ou d'un traitement mécanique, thermique ou chimique.

La tôle étant maintenue sur le conformateur 2, par exemple par les sangles 4, on réalise le renforcement d'une extrémité et l'obturation de l'extrémité opposée.

Pour ce faire, on soude sur l'une 9 des extrémités, en général l'extrémité avant, une paroi ou plaque transversale rigide d'obturation 10 dont le contour 11 correspond exactement au profil du corps 3 de benne à obtenir. Cette extrémité ainsi immobilisée procure une rigidité suffisante sur une certaine longueur.

On rigidifie ensuite l'autre extrémité 12 destinée généralement à comporter une porte pour son obturation temporaire puis le passage de la charge en position inclinée de déchargement.

Cette rigidification est obtenue par divers moyens de renfort. Il peut s'agir d'un doublage de renforcement 13 rapporté sur une longueur terminale prédéterminée du corps de benne, d'un caissonnage ou de la solidarisation d'un tube de renforcement ou autre élément rigide d'épaisseur et d'inertie suffisantes.

Selon cette méthode, on prévoit des différences adaptées de profil entre celui du conformateur et le profil définitif.

Il y a lieu notamment de conférer au conformateur une certaine préflèche, c'est-à-dire un degré supplémentaire de concavité en partie centrale inférieure en raison du caractère élastique de l'acier et donc de sa tendance à revenir à l'extérieur vers sa forme à plat.

On anticipe de cette façon les déformations ultérieures du corps de benne.

### Méthode par introduction dans un conformateur :

Selon cette méthode, le format 1 de tôle après constitution par raboutage ou autre, est maintenu par ses bords longitudinaux à l'aide de tous moyens flottants ou mobiles en prenant appui par exemple sur ses bordures ou profils de rives 6 ou 7 solidarisés de préférence de suite aux bords longitudinaux (figures 6 à 13).

Comme précédemment, la rigidification longitudinale des bords de rives peut également résulter de la pratique de nervures, plis ou autres déformations ou d'un traitement mécanique, thermique ou chimique.

On introduit la tôle dans un conformateur présentant une concavité tournée vers le haut. On fait ensuite intervenir un poinçon 14 (représenté par une flèche sur les figures) de forme adaptée par lequel la feuille 1 de tôle est engagée à force par la force de pression verticale de la partie longitudinale centrale du poinçon sur la zone centrale longitudinale 15 du format de tôle tout en retenant verticalement au besoin les bords longitudinaux. Au cours du mouvement d'abaissement du poinçon 14, les bords longitudinaux de la tôle se rapprochent jusqu'à ce que la feuille de tôle épouse étroitement la surface intérieure du conformateur 2 et extérieure du poinçon (figures 6 à 10).

La feuille de tôle prise entre ces deux formes se conforme selon la concavité du conformateur.

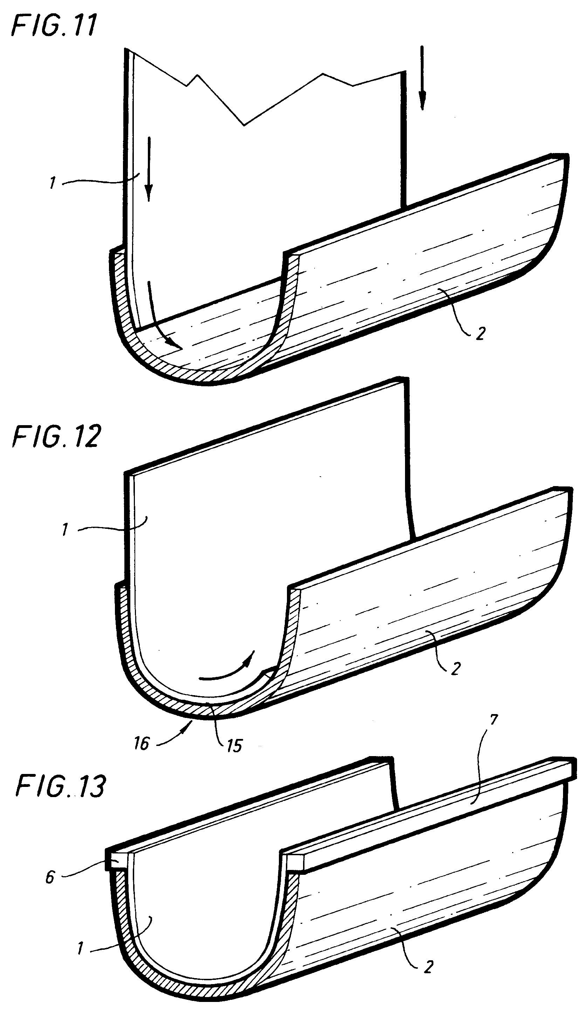

On peut également introduire la feuille de tôle par glissement (figure 11) le long de la surface intérieure 16 du conformateur 2 en la poussant et/ou en la tirant vers le bas par l'un et l'autre de ses deux bords longitudinaux. Au besoin, on la pousse vers le bas tout en la contraignant contre la surface latérale intérieure du conformateur.

La pression étant maintenue, on obture et on ferme ou renforce de la même façon que précédemment l'une et l'autre des extrémités du corps de benne partiellement constitué.

On peut également introduire le format de tôle dans le conformateur en pressant les deux bords longitudinaux ou les deux rives en rapprochement vers les deux bords longitudinaux du conformateur.

Le cas échéant, cette tôle est de suite ou après conformation rigidifiée le long de ses bords longitudinaux par des profils de rives 6 ou 7 ou des déformations longitudinales de rigidification appropriées.

Cette méthode présente l'avantage de conformer le corps de benne dans sa position normale d'utilisation et donc d'éviter son retournement à la fin des opérations.

### Méthode par pincement :

Pour cette méthode représentée sur les figures de 14 à 17, il n'existe pas de conformateur.

On utilise une feuille 1 de tôle grand format ou on réalise une feuille de tôle aux dimensions requises par raboutage de plusieurs feuilles de plus petit format.

Le cas échéant, le corps 3 de benne est de suite rigidifié à ses extrémités supérieures par la solidarisation de bordures ou de profils de rives 6 ou 7 ou par des déformations longitudinales appropriées de rigidification.

Comme précédemment, la rigidification longitudinale des bords de rives peut également résulter de la pratique de nervures, plis ou autres déformations longitudinales ou d'un traitement mécanique, thermique ou chimique.

On pince la feuille de tôle sur toute sa longueur par un moyen extérieur de pincement 17 : sangles ou autres.

Par pincement, il faut comprendre le rapprochement des deux bords latéraux l'un vers l'autre jusqu'à un certain intervalle.

On rapporte ensuite la plaque d'obturation 10 à l'une 9 des extrémités et on l'utilise comme moyen de prise de forme définitive.

Cette plaque aura été préalablement découpée selon des contours identiques au profil à obtenir.

On adapte par resserrement ou par soulagement local du pincement le contour de l'extrémité ouverte au chant du contour 11 de la plaque d'obturation 10 et on soude celle-ci au fur et à mesure par ses bords aux bords correspondants de l'extrémité 9 du corps 3 de benne.

On procède de façon analogue à celle de la méthode avec conformateur pour le renforcement de l'autre extrémité 12 avec l'aide d'une préforme.

Lorsque la rigidification est obtenue au niveau de cette autre extrémité, on libère les moyens de pincement 17.

Le cas échéant, le corps de benne est ensuite rigidifié à ses extrémités supérieures par la solidarisation des profils de rive 6 ou 7 ou par une rigidification longitudinale.

### Traitement mécanique :

En variante, on traite les parties de plus grande courbure des flancs 18 du corps 3 de benne par la projection sous pression à l'aide de buses 19 de particules ou de grains solides de matière dure selon un procédé de grenaillage ou de sablage ou par un procédé de martelage en vue d'améliorer la prise de forme sur toute la longueur du corps de benne et le maintien de cette forme (figure 18).

Cet effet mécanique a l'avantage de détendre la matière en surface c'est-à-dire d'allonger les fibres de la peau extérieure de la tôle et ainsi de neutraliser sa tendance à retrouver sa forme initiale à plat. Il a aussi l'avantage de réaliser une protection anti-corrosion sous tension.

Ce traitement mécanique peut être effectué depuis l'extérieur alors que la tôle est encore dans le conformateur qui présenterait à cet effet des ouvertures, par exemple une structure ajourée ou à quartiers entre des arceaux tels que 20 comme représenté sur la figure 18.

## Revendications

1. Procédé de conformation d'un corps de benne selon un profil concave de courbure continue, sans pliage, à partir d'un grand format de tôle caractérisé par les étapes suivantes :
. on prépare un grand format (1) de tôle d'une seule pièce ou rendu d'une seule pièce ;
. on incurve par des moyens de maintien (4,5) le format (1) de tôle d'une seule pièce selon une forme de profil de section voisine de la forme définitive obtenue par anticipation des déformations ultérieures du corps (3) de benne ;
. on solidarise à l'une (9) des extrémités du corps de benne une plaque d'obturation (10) dont les contours (11) présentent la forme exacte du profil concave à obtenir en appliquant, au fur et à mesure de la solidarisation, les bords de l'ouverture de cette extrémité de la tôle contre les chants de la plaque d'obturation (10) ;
. on rigidifie l'autre extrémité (12) de la tôle par un renfort (13) selon le profil exact à obtenir ;
. on soulage la pression provoquée par les moyens de maintien et on libère le corps (3) de benne qui s'établit selon le profil définitif ;
. on rigidifie les bords longitudinaux avant ou après incurvation du format (1) de tôle.

2. Procédé de conformation d'un corps de benne selon la revendication 1 caractérisé en ce que l'on solidarise à l'extrémité (9) du corps de benne la plaque d'obturation (10) après avoir rigidifié l'autre extrémité (12) de la tôle par un renfort (13) selon le profil exact à obtenir.

3. Procédé de conformation d'un corps de benne selon la revendication 1 caractérisé en ce que l'on pose des profils de rive (6,7) avant incurvation de la tôle.

4. Procédé de conformation d'un corps de benne selon la revendication 1 caractérisé en ce que l'on pose des profits de rive (6,7) après incurvation de la tôle.

5. Procédé de conformation d'un corps de benne selon la revendication précédente caractérisé en ce que l'on pose les profits de rive (6,7) après rigidification de l'autre extrémité (12) de la tôle par le renfort (13).

6. Procédé de conformation d'un corps de benne selon l'une des revendications 1, 2 ou 3 caractérisé en ce que l'on utilise un conformateur (2) et que l'on anticipe les déformations ultérieures du corps de benne par une préflèche dans le profit de section du conformateur (2).

7. Procédé de conformation d'un corps de benne selon l'une des revendications 1, 2, 3 ou 6 caractérisé en ce que l'on incurve le format (1) de tôle en l'appliquant sur la surface extérieure convexe d'un conformateur convexe (2).

8. Procédé de conformation d'un corps de benne selon l'une des revendications 1, 2, 3 ou 6 caractérisé en ce que l'on incurve le format (1) de tôle en l'introduisant dans l'espace intérieur de la surface intérieure concave d'un conformateur concave (2), on l'amène en contact et on la maintient en contact avec cette surface.

9. Procédé de conformation d'un corps de benne selon la revendication précédente caractérisé en ce que l'on amène le format (1) de tôle en contact avec ta surface intérieure concave (16) du conformateur concave (2) en te faisant glisser le long de cette surface intérieure.

10. Procédé de conformation d'un corps de benne selon la revendication 8 caractérisé en ce que t'on amène te format (1) de tôle en contact avec la surface intérieure concave (16) du conformateur concave (2) en la poussant vers le bas par sa partie centrale.

11. Procédé de conformation d'un corps de benne selon la revendication 8 caractérisé en ce que l'on amène le format (1) de tôle en contact avec la surface intérieure concave du conformateur concave (2) en pressant les deux bords longitudinaux ou tes deux profits de rives (6,7) en rapprochement descendant vers les bords longitudinaux du conformateur.

12. Procédé de conformation d'un corps de benne selon l'une quelconque des revendications précédentes caractérisé en ce qu'on détend la tôle par un traitement mécanique sur les zones de plus forte courbure.

13. Procédé de conformation d'un corps de benne selon la revendication précédente caractérisé en ce que le traitement mécanique intervient après la solidarisation des profils de rive.

14. Procédé de conformation d'un corps de benne selon ta revendication 12 ou 13 caractérisé en ce que le traitement mécanique est une projection de grains ou de particules solides de matière dure.

15. Procédé de conformation d'un corps de benne selon l'une quelconque des revendications précédentes caractérisé en ce que l'on rigidifie les bords longitudinaux du format (1) de tôle par une déformation longitudinale (8).

16. Procédé de conformation d'un corps de benne selon l'une quelconque des revendications précédentes caractérisé en ce que l'on rigidifie les bords longitudinaux du format de tôle (1) par un traitement mécanique, thermique ou chimique.

## Claims

1. A method for forming a skip body from a large sheet of metal with a continuously curved, concave cross-section without creasing it, characterized by the following steps:
. a large sheet (1) of metal is prepared from one piece or several joined pieces;
. the single sheet (1) of metal is curved using maintenance means (4, 5) into a cross section approximating the final exact shape desired for the shape of the skip body (3) which curvation is obtained by anticipation of the subsequent deformations of the skip body (3);
. a sealing plate (10) is secured to one of the extremities (9) of the skip body, the contours (11) of which have the exact concave shape to be obtained, by gradually applying the edges of the opening of this end of the metal sheet against the cut edges of sealing plate (10) during the sealing process;
. the opposed extremity (12) of the skip body is stiffen by means of a stiffening member (13) according to the definitive shape to be reached ;
. the pressure of the maintenance means is relaxed and the skip body (3) is disengaged, having assumed its definitive shape.
. the stiffening of its longitudinal edges is performed either before or after the sheet (1) of metal is curved.

2. A method for shaping a skip body according to claim 1, characterized by securing the sealing plate (10) to the extremity (9) of the skip body after the stiffening of the other extremity (12) of the sheet by means of a stiffening member (13) according to the definite shape to be reached.

3. A method for shaping a skip body according to claim 1 characterized in that verge portions (6,7) are secured to the sheet of metal before the metal is curved.

4. A method for shaping a skip body according to claim 1 characterized in that verge portions (6,7) are secured to the sheet of metal after the metal is curved.

5. A method for shaping a skip body according to the preceding claim, characterized in that verge portions (6,7) are secured to the sheet of metal after the stiffening of the other extremity (12) of the sheet by means of the stiffening member (13).

6. A method for shaping a skip body according to any one of the claims 1, 2 or 3 characterized by using a form (2) which has been pre-molded into the ultimate shape of the skip body (3) by anticipation of the subsequent déformation of the skip body (3).

7. A method for shaping a skip body according to any one of the claims 1, 2, 3 or 6 characterized in that the sheet of metal (1) is curved inward by applying it to the exterior surface of a convex form (2).

8. A method for shaping a skip body according to any one of the claims 1, 2, 3 or 6 characterized in that the sheet of metal (1) is curved inwardly by introducing it inside the concave interior of a concave form (2), placing it in contact with this surface and maintaining it in contact.

9. A method for shaping a skip body according to claim 8 characterized in that the sheet of metal (1) is placed in contact with the interior concave surface (16) of the concave form (2) by sliding it along said interior surface.

10. A method for shaping a skip body according to claim 8 characterized in that the sheet of metal is placed in contact with the concave interior surface (16) of the concave form (2) by pushing down the central portion of this sheet of metal.

11. A method for shaping a skip body according to claim 8 characterized in that the sheet (1) of metal is placed in contact with the interior concave surface of the concave form (2) by pressing together the longitudinal edges or the two verge portions (6, 7) down towards the longitudinal edges of the form.

12. A method for shaping a skip body according to any one of the preceding claims characterized in that the metal is released by applying mechanical treatment to its most curved areas.

13. A method for shaping a skip body according to the preceding claim characterized in that mechanical treatment occurs after the verge portions have been secured.

14. A method for shaping a skip body according to either claim 12 or 13 characterized in that the mechanical treatment consists of a spray of grains or solid particles of hard material.

15. A method for shaping a skip body according to any one of the preceding claims characterized in that the longitudinal deformation (8) is used to stiffen the longitudinal edges of the sheets (1) of metal.

16. A method for shaping a skip body according to any one of the preceding claims characterized in that the longitudinal edges of the sheet (1) of metal are stiffened by mechanical, thermal, or chemical treatment.

## Patentansprüche

1. Verfahren zum falzlosen Formen eines Kübelkörpers mit einem konkaven Profil mit stetiger Krümmung aus einem Blech großen Formates, gekennzeichnet durch folgende Schritte:
- Vorbereiten eines einstückigen oder aus einem Stück erhaltenen Blechs (1) großen Formates (1);
- Krümmen des einstückigen Formatblechs (1) mittels Haltemitteln (4, 5) gemäß einem Querschnittsprofil, das annähernd der endgültigen, durch Vorgriff auf die spätere Verformung erhaltenen Gestalt des Kübelkörpers (3) entspricht;
- Verbinden einer Abschlußplatte (10), deren Kontur (11) der exakten Form des zu erzeugenden konkaven Profils entspricht, mit einem (9) der Enden des Kübelkörpers, indem die Öffnungsränder dieses Endes des Blechs nach Maßgabe der Verbindung gegen die Kanten der Abschlußplatte (10) angelegt werden;
- Versteifen des anderen Endes (12) des Blechs mit einem Verstärkungsstück (13), entsprechend dem zu erzeugenden, exakten Profil;
- Entlasten des von den Haltemitteln erzeugten Drucks und Lösen des Kübelkörpers (3), der sein endgültiges Profil annimmt;
- Versteifen der Längskanten vor oder nach dem Krümmen des Formatblechs (1).

2. Verfahren zum Formen eines Kübelkörpers nach Anspruch 1, dadurch gekennzeichnet, daß die Abschlußplatte (10) an das Ende (9) des Körpers des Kübels angefügt wird, nachdem das andere Ende (12) des Blechs mit einem Verstärkungsstück (13), welches das zu erzeugende, exakte Profil aufweist, versteift worden ist.

3. Verfahren zum Formen eines Kübelkörpers nach Anspruch 1, dadurch gekennzeichnet, daß vor dem Krümmen des Blechs Randleisten (6, 7) angeordnet werden.

4. Verfahren zum Formen eines Kübelkörpers nach Anspruch 1, dadurch gekennzeichnet, daß nach dem Krümmen das Blechs Randleisten (6, 7) angeordnet werden.

5. Verfahren zum Formen eines Kübelkörpers nach dem vorangehenden Anspruch, dadurch gekennzeichnet, daß die Randleisten (6, 7) nach dem Versteifen des anderen Endes (12) des Blechs mit dem Verstärkungsstück (13) angeordnet werden.

6. Verfahren zum Formen eines Kübelkörpers nach einem der Ansprüche 1 bis 3, dadurch gekennzeichnet, daß ein Formprofil (2) verwendet wird, und daß die nachträglichen Umformungen des Kübelkörpers durch ein Vorbiegen des Profilquerschnitts des Formprofils (2) vorgegeben werden.

7. Verfahren zum Formen eines Kübelkörpers nach einem der Ansprüche 1 bis 3 oder 6, dadurch gekennzeichnet, daß das Formatblech (1) durch Aufbringen auf die äußere, konvexe Fläche eines konvexen Formprofils (2) gekrümmt wird.

8. Verfahren zum Formen eines Kübelkörpers nach einem der Ansprüche 1 bis 3 oder 6, dadurch gekennzeichnet, daß das Formatblech (1) durch Einführen in den Innenraum einer konkaven Innenfläche eines konkaven Formprofils (2) gekrümmt, im Kontakt zugeführt und in Kontakt mit dieser Fläche gehalten wird.

9. Verfahren zum Formen eines Kübelkörpers nach dem vorangehenden Anspruch, dadurch gekennzeichnet, daß das Formatblech (1) in Kontakt mit der konkaven Innenfläche (16) des konkaven Formprofils (2) zugeführt wird, indem es entlang dieser Innenfläche gleitend geführt wird.

10. Verfahren zum Formen eines Kübelkörpers nach Anspruch 8, dadurch gekennzeichnet, daß das Formatblech (1) in Kontakt mit der konkaven Innenfläche (16) des konkaven Formprofils (2) zugeführt wird, indem es mit seinem Mittelteil nach unten gestoßen wird.

11. Verfahren zum Formen eines Kübelkörpers nach Anspruch 8, dadurch gekennzeichnet, daß das Formatblech (1) in Kontakt mit der konkaven Innenfläche des konkaven Formprofils (2) zugeführt wird, indem die beiden Längsränder oder die beiden Randleisten (6, 7) unter gegenseitiger Annäherung in Richtung der Längsränder des Formprofils abgesenkt werden.

12. Verfahren zum Formen eines Kübelkörpers nach einem der vorangehenden Ansprüche, dadurch gekennzeichnet, daß das Blech in den Zonen stärkster Krümmung durch eine mechanische Behandlung entspannt wird.

13. Verfahren zum Formen eines Kübelkörpers nach dem vorangehenden Anspruch, dadurch gekennzeichnet, daß die mechanische Behandlung nach dem Anbringen der Randleisten durchgeführt wird.

14. Verfahren zum Formen eines Kübelkörpers nach Anspruch 12 oder 13, dadurch gekennzeichnet, daß die mechanische Behandlung durch Strahlen mit Körnern oder festen Partikeln aus einem harten Material erfolgt.

15. Verfahren zum Formen eines Kübelkörpers nach einem der vorangehenden Ansprüche, dadurch gekennzeichnet, daß die Längsränder des Formatblechs (1) durch eine Längsverformung (8) versteift werden.

16. Verfahren zum Formen eines Kübelkörpers nach einem der vorangehenden Ansprüche, dadurch gekennzeichnet, daß die Längsränder des Formatblechs (1) durch mechanische, thermische oder chemische Behandlung versteift werden.
